(19) Europäisches Patentamt
European Patent Office
Office européen des brevets

(11) **EP 2 852 237 B1**

(12) **EUROPEAN PATENT SPECIFICATION**

(45) Date of publication and mention
of the grant of the patent:
**21.10.2015 Bulletin 2015/43**

(51) Int Cl.:
**H04W 72/06** *(2009.01)*    *H04W 72/04* *(2009.01)*

(21) Application number: **13185016.6**

(22) Date of filing: **18.09.2013**

(54) **A method of allocating bandwidth in a gprs and edge system**

Verfahren zur Zuweisung von Bandbreite in eine GPRS- und EDGE-System

Procédé d'affectation de largeur de bande dans un système GPRS et EDGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.03.2015 Bulletin 2015/13**

(73) Proprietor: **Kapsch CarrierCom AG
1120 Wien (AT)**

(72) Inventors:
 • **Pucci, Carlo
  91470 Limours (FR)**
 • **Farine, Helene
  78280 Guyacourt (FR)**
 • **Leger, Christian
  78530 Buc (FR)**

(74) Representative: **Weiser, Andreas
Patentanwalt
Kopfgasse 7
1130 Wien (AT)**

(56) References cited:
**EP-A1- 1 437 866**

 • **NOGUEIRA G ET AL: "An efficient analytical model for QoS engineering in mobile cellular networks", WORLD OF WIRELESS, MOBILE AND MULTIMEDIA NETWORKS, 2008. WOWMOM 2008. 2008 INTERNATIONAL SYMPOSIUM ON A, IEEE, PISCATAWAY, NJ, USA, 23 June 2008 (2008-06-23), pages 1-12, XP031302773, ISBN: 978-1-4244-2099-5**
 • **ALCATEL: "Enhancements to support of streaming services in GERAN A/Gb mode", 3GPP DRAFT; S2-030086, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. San Francisco, USA; 20030115, 15 January 2003 (2003-01-15), XP050242621, [retrieved on 2003-01-15]**

# EP 2 852 237 B1

**Description**

The present invention relates to a method of allocating available bandwidth for packet switched data transmissions in a GSM or GSM-R system having a PFC service module for handling bandwidth demands from mobile stations, a group of which shares at least one TDMA timeslot.

The prior art is represented by the following documents:

- "An efficient analytical model for QoS engineering in mobile cellular networks" (World of Wireless, Mobile and Multimedia Networks, 2008. WoWMoM 2008. 2008 International Symposium, IEEE, Piscataway, NJ, USA) which discloses the resources management according to QoS criteria in case of terminal devices (GPRS and EDGES terminals among others) which have different (i.e. from the typology point of view like Real Time or No Real Time) packet data connections with the network,
- "Enhancements to support of streaming services in GERAN A/Gb mode" (3GPP Draft; S2-030086, 3rd Generation Partnership Project (3GPP), Mobile Competence Centre ; 650, route des Lucioles ; F-06921 Sophia-Antipolis Cedex ; France) and
- EP1437866 A1 20040714 - which discloses a network element for a core network of a mobile communication system, comprising unit for performing the streaming services support optimizing method (i.e. used for optimizing a support of streaming services e.g. telephony service, in the packet switched domain of a mobile communication system (claimed) including global system for mobile communication (GSM)/enhanced data rates for GSM evolution (EDGE) radio access network (GERAN) access technology.)

Wireless communication between a base transceiver station (BTS) and mobile stations in a Global System for Mobile communications (GSM) as per the ETSI set of standards and the related standard for railway, GSM-R, uses both frequency division multiple access (FDMA) and time division multiple access (TDMA). While FDMA is used to separate uplink from downlink channels, each TDMA frame is divided into eight timeslots. A timeslot can then be dedicated to a circuit switched voice call or to packet switched data transmissions, e.g. according to a general packet radio service (GPRS) with standard modulation or modulation according to enhanced data rates for GSM evolution (EDGE).

A GSM mobile station uses only one timeslot in uplink and downlink direction for a circuit switched voice call, whereas a GPRS or EDGE mobile station can use several timeslots in uplink and/or downlink direction for packet switched data transmissions. Furthermore, several mobile stations can be connected to a group sharing one or more timeslots for packet switched data transmissions.

For providing different levels of quality of service in terms of bandwidth and priority of access to the services of a GSM or GSM-R operator, packet flow contexts (PFCs) have been introduced by the third generation partnership project (3GPP) to be assigned to data transmissions. PFCs are also used in GSM-R systems to guarantee the right priority to data transmissions therein. PFCs, several of which can be used by a mobile station, define, among other things: a traffic class, being realtime (RT) PFC or non-realtime (NRT) PFC, and a traffic han-dling priority denominating relative priorities of NRT PFC, i.e. THP1, THP2 or THP3.

The PFC is identified by a packet flow identifier to the data packets transmitted. The PFC packet flow identifier also indicates the bandwidth demands from mobile stations. Using the PFC information, a PFC service module can handle bandwidth demands from the mobile stations within reach of a BTS by allocating available bandwidth of one or more timeslots.

An allocation of available bandwidth and the possible sharing of extra bandwidth exceeding the total bandwidth demanded by the mobile stations is relatively easy as long as all mobile stations of the connected group only use GPRS service or all mobile stations of the connected group only use EDGE service. In contrast, mixing mobile stations of GPRS and EDGE type in one group is non-trivial because the bit rates per timeslot guaranteed for data transmissions using GPRS ("pfcTSGBR$_{GPRS}$") differ from those using EDGE ("pfcTSGBR$_{EDGE}$").

For EDGE data transmissions, the guaranteed bit rate per timeslot is configurable at the base station controller by the operator; for GPRS data transmission, the parameter depends on the coding scheme selected and only two possible values are allowed, 8 kbits/s or 11 kbits/s. In GSM-R systems this parameter is e.g. set to 8 kbits/s for GPRS and to 20 kbits/ for EDGE. Sharing available bandwidth within the same timeslot(s) at different guaranteed bit rates would lead to exceeding physical limitations of GPRS data transmissions and/or poor utilization or unbalanced sharing of the available bandwidth of the timeslots and is therefore prohibited.

It is an object of the invention to provide a method of allocating available bandwidth for packet switched data transmissions which overcomes such restrictions and is more flexible and efficient than current methods.

This object is achieved with a method of the type mentioned above, wherein said group of mobile stations contains at least one GPRS and at least one EDGE mobile station, the method comprising:

- calculating an expansion factor E according to

$$E = \frac{NbTSinCGroup}{\dfrac{D_{GPRS}}{pfcTSGBR_{GPRS}} + \dfrac{D_{EDGE}}{pfcTSGBR_{EDGE}}}$$

with

$NbTSinCGroup$ being the number of TDMA timeslots shared by said group,

$D_{GPRS}$, $D_{EDGE}$ being the accumulated bandwidth demands of the GPRS and the EDGE mobile stations, respectively, of said group,

$pfcTSGBR_{GPRS}$, $pfcTSGBR_{EDGE}$ being predetermined guaranteed bit rates per timeslot for data transmissions of GPRS and EDGE mobile stations, respectively; and

- allocating available bandwidths to the at least one GPRS and the at least one EDGE mobile station according to

$$A_{GPRS} = E \cdot D_{GPRS}$$

$$A_{EDGE} = E \cdot D_{EDGE}$$

with

$A_{GPRS}$, $A_{EDGE}$ being the allocated bandwidths for data transmissions of the GPRS and the EDGE mobile stations, respectively, of said group.

This method simultaneously reflects the capabilities of both GPRS and EDGE mobile stations. The available bandwidth in one or more EDGE-TDMA timeslots used by a group of mobile stations can efficiently be allocated, no available bandwidth is lost and no bandwidth limitations due to coding schemes are exceeded. Also, the computational efforts for performing the method are low and can easily be executed by the PFC service module. In addition, the method is not necessarily limited to conditions where the accumulated bandwidth demands of the mobile stations are lower than the available bandwidth, but also supports conventional methods of allocating available bandwidth in the other case.

For further decreasing the calculating efforts of the method, it is advantageous if said step of calculating the expansion factor E is performed according to

$$E = \frac{NbTSinCGroup \cdot pfcTSGBR_{EDGE}}{D_{GPRStoEDGE} + D_{EDGE}}$$

with

$$D_{GPRStoEDGE} = S_f \cdot D_{GPRS}$$

and

$$S_f = \frac{pfcTSGBR_{EDGE}}{pfcTSGBR_{GPRS}} \quad ;$$

and

in that said step of allocating bandwidths is performed according to

$$A_{GPRS} = E \cdot D_{GPRStoEDGE} \cdot \frac{1}{S_f}$$

$$A_{EDGE} = E \cdot D_{EDGE}$$

The parameter $D_{GPRStoEDGE}$ denotes the accumulated bandwidth demand of the at least one GPRS mobile station of said group scaled up to the predetermined EDGE guaranteed bit rate by means of the scaling factor $S_f$.

As a deep code analysis showed, the parameter $pfcTSGBR_{EDGE}$ for data transmissions of EDGE mobile stations is widely used in current codes, whereas the alike parameter for data transmissions of GPRS mobile stations, having a lower number of possible values, only infrequently occurs in current codes making it less accessible. Furthermore, scaling up rather than scaling down increases accuracy and thereby computing performance. It is therefore advantageous to use said parameter of GPRS mobile stations just once throughout the computation when calculating the scaling factor and using the parameter of EDGE mobile stations for all remaining calculations.

In a favourable embodiment said accumulated bandwidth demands each comprise a sum of realtime and non-realtime bandwidth demands. Thus, the present method can be used even if different PFC traffic classes are specified, i.e. RT PFC and NRT PFC. It is particularly favourable if said non-realtime bandwidth demand comprises a sum of non-realtime bandwidth demands of three different predefined traffic handling priorities. Thus also relative priorities THP1, THP2 and THP3, as defined for NRT PFC, are accounted for by the method.

In a particularly preferred embodiment said method is performed separately for uplink and downlink data transmissions. This avoids interference between uplink and downlink bandwidth demands which generally considerably differ. The flexibility and efficiency of the method can thereby be further increased.

The invention will now be described in further detail by means of exemplary embodiments thereof under reference to the enclosed drawings in which:

Fig. 1 shows a block schematic of a GSM or GSM-R system;
Figs. 2 to 4 each depict an exemplary timeslot used for packet switched data transmissions in a system according to Fig. 1 in different situations in terms of bandwidth demands and PFC specification; and
Fig. 5 depicts an exemplary timeslot shared between a GPRS and an EDGE mobile station according to the invention.

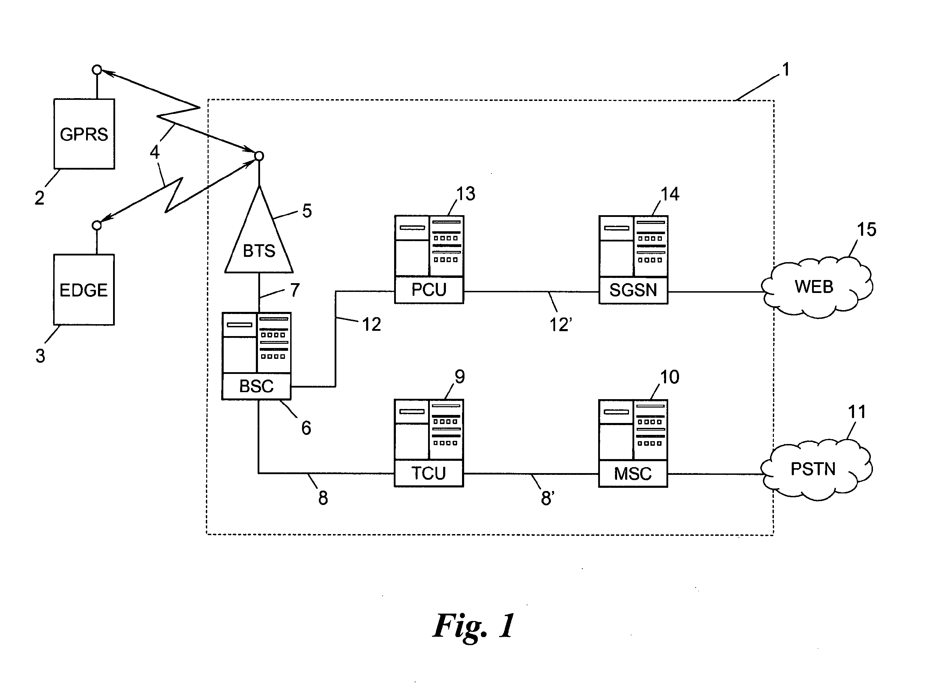

According to Fig. 1 a GSM or GSM-R system 1 communicates with both a GPRS mobile station 2 and an EDGE mobile station 3 via radio links 4 to a base transceiver station 5 (BTS). The BTS is connected with and controlled by a base station controller (BSC) 6 via a link 7. The BSC 6, inter alia, separates circuit switched voice calls from packet switched data transmissions. Thus, voice calls are routed via a voice links 8, 8', wherein voice link 8 is a proprietary interface, while voice link 8' is defined in the 3GPP standards, and a transceiver coding unit (TCU) 9 to a mobile-services switching centre (MSC) 10 which delivers the calls to a public switched telephone network (PSTN) 11 or to other mobile stations 2, 3 (not shown) of the GSM or GSM-R system 1. On the other hand, data transmissions are routed via a data links 12, 12', wherein data link 12 is a proprietary interface, while data link 12' is defined in the 3GPP standards, and a packet control unit (PCU) 13 to a serving GPRS support note (SGSN) 14, which provides data services to the mobile stations 2, 3, e.g. connection services to the internet 15.

It is understood that a GSM or GSM-R system 1 typically comprises a multiplicity of BTSs 5, at least some of which might be radio linked with a plurality of mobile stations 2, 3; each BTS 5 being controlled by a BSC 6 connected to an SGSN 14 and an MSC 10 via a PCU 13 and a TCU 9, respectively. Each BTS 5 may be composed of several radio transceivers (not shown).

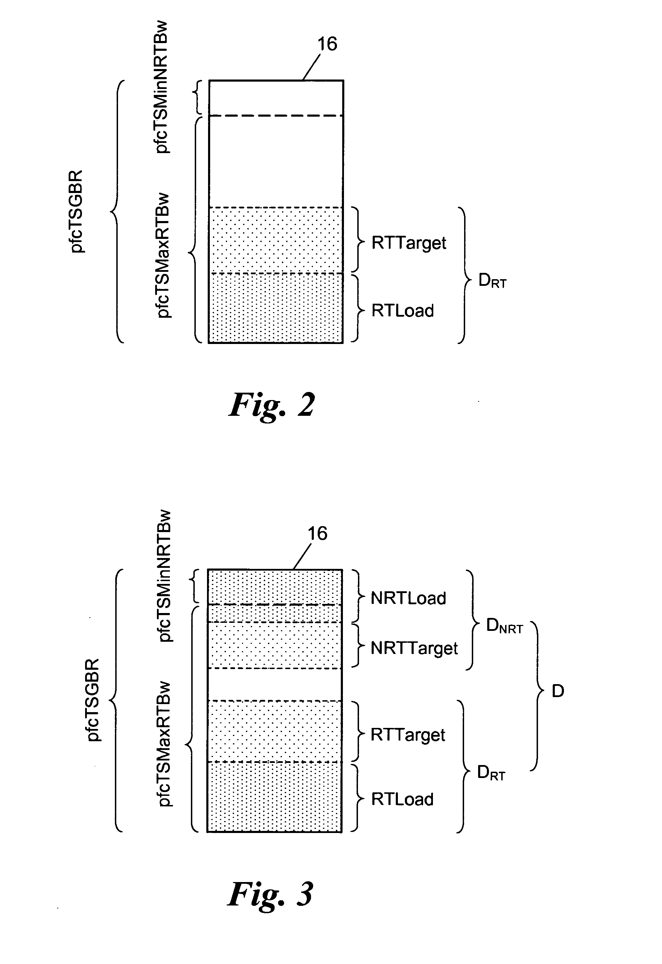

According to GSM standards, also being the basis for GSM-R according to ETCS-2 (European train control system) standards, a GSM or GSM-R system 1 offers time division multiple access (TDMA) to mobile stations 2, 3, wherein each TDMA-frame is divided into eight timeslots 16, one of which is depicted in the Figs. 2 to 5. Each timeslot 16 can either be used for circuit switched voice communication or packet switched data transmissions. One or more timeslots 16 used for data transmissions can be shared by several mobile stations 2 or 3 which thereby connect to a group. GSM or GSM-R systems 1 separate uplink from downlink channels by using different frequencies (frequency division multiple access, FDMA).

For permitting GSM operators to offer several levels of quality of service in terms of bandwidth and priority to access the offered GSM services, packet flow contexts (PFCs) were introduced by 3GPP (third generation partnership project) standards. Inter alia, PFCs define two categories of traffic class (TC), realtime (RT) and non-realtime (NRT) PFC, as well as relative priorities between RT PFCs as allocation retention priorities (ARPs), traffic handling priorities (THPs) for NRT PFC, i.e. THP1, THP2 or THP3, bandwidth demands of mobile station(s) 2, 3 in RT PFC to be guaranteed by the GSM or GSM-R system 1, and bandwidth demands of mobile station(s) 2, 3 in NRT PFC to be allocated by the GSM or GSM-R system 1 at most, i.e. without any guarantee. Each PFC is identified by a packet flow identifier (PFI).

In GSM-R systems, PFCs can assign categories and priorities to packet switched data transmissions for providing a stable and robust data flow between trains and a centralised control centre to convey signalling messages to manage the train operation (speed, deceleration, train stop etc.). A service based on PFC can thus meet the requirements in terms of quality of service to guarantee the appropriate priories to data transmissions according to the ETCS-2 standards.

When a data transmission according to a PFC shall be initiated, the PFC service module, typically hosted by the PCU 13, analyzes the available bandwidth in the TDMA timeslot 16 intended to be used and allocates available bandwidth to the mobile stations 2, 3 in consideration of the PFC parameters as identified by the PFI.

The function of the PFC service module is composed of three main phases:

the offer computation phase to determine if enough bandwidth is available to satisfy demands of mobile stations 2, 3 newly linking to a BTS 5 ("incoming" mobile station 2, 3) and to furnish the best possible allocation of data transmissions to timeslots 16;

the admission control phase, where data transmissions are accepted, rejected or their PFC priorities are downgraded in case the demanded bandwidths exceed, for the overall mobile stations, the available bandwidth; and

the PFC scheduling phase, where the bandwidth used is monitored and eventually remaining bandwidth is shared among the mobile stations 2, 3.

The function of the PFC service module shall be explained by means of the examples in Figs. 2 to 5.

Fig. 2 shows an exemplary TDMA timeslot 16. For data transmissions, the GSM or GSM-R system 1 guarantees a bit rate pfcTSGBR per timeslot 16 to either GPRS or EDGE mobile stations 2, 3. These guaranteed bit rates pfcTSGBR are predetermined by the operator; a guaranteed bit rate per timeslot $pfcTSGBR_{GPRS}$ of GPRS mobile stations 2 in general is lower than a guaranteed bit rate per timeslot $pfcTSGBR_{EDGE}$ of EDGE mobile stations 3.

The timeslot 16 is divided into a portion reserved for NRT and non-PFC data transmissions pfcTSMinNRTBw and a portion available for RT PFC data transmissions pfcTSMaxRTBw. In the example of Fig. 2 a portion of the bandwidth available for RT data transmissions pfcTSMaxRTBw is loaded with RT data transmissions RTLoad of mobile stations 2, 3 which are already linked with the BTS 5 and connected as a group. Another portion represents the intended additional RT bandwidth demands RTTarget of another connected group of at least one incoming mobile station 2, 3 intending to get linked with BTS 5. Present load RTLoad and additional demand RTTarget add up to the total RT bandwidth demand $D_{RT}$ which the GSM or GSM-R system 1 should provide.

During the offer computation phase, the PFC service module determines the best allocation in a timeslot 16 for such an incoming mobile station 2, 3. In the case of the example of Fig. 2, where the RT bandwidth demand $D_{RT}$ is lower to the maximum available RT bandwidth pfcTSMaxRTBw, such an allocation is easily possible during the offer computation phase and the incoming mobile station 2, 3 will not be rejected during the admission control phase.

A similar situation is shown in Fig. 3 where timeslot 16 is loaded with both RT and NRT data transmissions RTLoad, NRTLoad of mobile stations 2, 3 linked with the BTS 5 and there is an additional demand for both RT and NRT data transmissions RTTarget, NRTTarget from incoming mobile stations 2, 3. Both current NRT data transmissions NRTLoad and intended NRT data transmissions NRTTarget add up to an NRT bandwidth demand $D_{NRT}$ which, together with the RT bandwidth demand $D_{RT}$, constitutes accumulated bandwidth demand D. In the example of Fig. 3, this accumulated bandwidth demand D can be satisfied and will therefore not be rejected during the admission control phase.

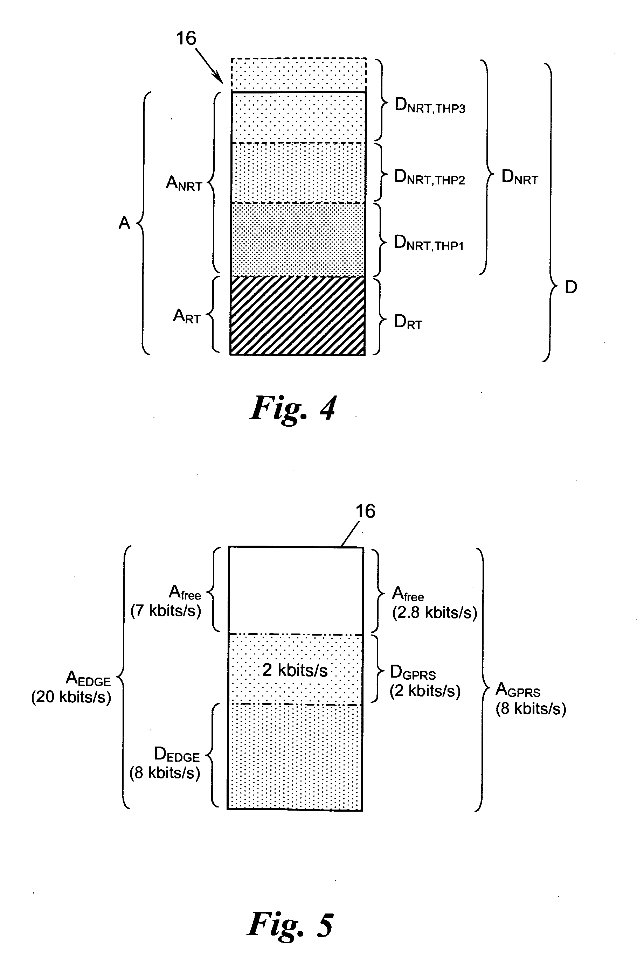

As shown in Fig. 4, it is also possible that the accumulated bandwidth demands D of the mobile stations 2, 3 exceed the available bandwidth A. For simplicity reasons, in the depiction of Fig. 4 there is no distinction between current load RTLoad, NRTLoad and new bandwidth demands RTTarget, NRTTarget. Instead, the NRT bandwidth demand $D_{NRT}$ is broken down into NRT bandwidth demands $D_{NRT,THP1}$, $D_{NRT,THP2}$, $D_{NRT,THP3}$ of different THPs.

During the scheduling phase, the PFC service module uses the different TCs and THPs according to the PFCs to shrink the accumulated bandwidth demand D down to the available bandwidth A. For this purpose, limiting factors $L_{THP3}$, $L_{THP2}$ are calculated according to

$$L_{THP3} = 1 - PR_{THP2}$$

(eq. 1)

$$L_{THP2} = 1 - PR_{THP1}$$

with $PR_{THP2}$, $PR_{THP1}$ being predetermined preemption ratios for THP2 and THP1, e.g. ranging from 0 to 0.935.

Next, the PFC service module checks whether the NRT bandwidth demands $D_{NRT}$, after limitation of the bandwidth demands $D_{NRT,THP3}$ for THP3, fall below the available bandwidth $A_{NRT}$ for NRT data transmissions according to

$$D_{THP1} + D_{THP2} + \left(L_{THP3} \cdot D_{THP3}\right) \le A_{NRT} \qquad \text{(eq. 2)}$$

If equation 2 is met, reduction factors $R_{THP3}$, $R_{THP2}$, $R_{THP1}$ are calculated as

$$R_{THP3} = \frac{A_{NRT} - \left(D_{THP1} + D_{THP2}\right)}{D_{THP3}}$$

$$R_{THP2} = 1 \qquad \text{(eq. 3)}$$

$$R_{THP1} = 1$$

If equation 2 is not complied with, the PFC Service module analyses whether the following is fulfilled:

$$D_{THP1} + L_{THP2} \cdot \left(D_{THP2} + \left(L_{THP3} \cdot D_{THP3}\right)\right) \le A_{NRT} \qquad \text{(eq. 4)}$$

In this case, the reduction factors $R_{THP3}$, $R_{THP2}$, $R_{THP1}$ are set to

$$R_{THP3} = L_{THP3}$$

$$R_{THP2} = \frac{A_{NRT} - D_{THP1}}{D_{THP2} + \left(L_{THP3} \cdot D_{THP3}\right)} \qquad \text{(eq. 5)}$$

$$R_{THP1} = 1$$

If, on the other hand, the requirements of equation 4 were not met, the reduction factors $R_{THP3}$, $R_{THP2}$, $R_{THP1}$ would be

$$R_{THP3} = L_{THP3}$$

$$R_{THP2} = L_{THP2} \qquad \text{(eq. 6)}$$

$$R_{THP1} = \frac{A_{NRT}}{D_{THP1} + L_{THP2} \cdot \left(D_{THP2} + \left(L_{THP3} \cdot D_{THP3}\right)\right)}$$

The PFC service module then allocates available bandwidth $A_{RT}$, $A_{NRT,THP1}$, $A_{NRT,THP2}$, $A_{NRT,THP3}$ according to

$$A_{RT} = D_{RT}$$

$$A_{NRT,THP1} = R_{THP1} \cdot D_{NRT,THP1}$$

$$\text{(eq. 7)}$$

$$A_{NRT,THP2} = R_{THP1} \cdot R_{THP2} \cdot D_{NRT,THP2}$$

$$A_{NRT,THP3} = R_{THP1} \cdot R_{THP2} \cdot R_{THP3} \cdot D_{NRT,THP3}$$

with the reduction factors $R_{THP3}$, $R_{THP2}$, $R_{THP1}$ determined in accordance with equations 1 to 6.

If any of the RT or NRT bandwidth demands $D_{RT}$, $D_{NRT,THP1}$, $D_{NRT,THP2}$, $D_{NRT,THP3}$ is already an accumulation of a number of i demands from one or more of the mobile stations 2, 3 of the group, the results of equations 7 are broken down further. Thereby, allocations of available bandwidths $A_{RT}$, $A_{NRT,THP1}$, $A_{NRT,THP2}$, $A_{NRT,THP3}$ (and possible limitations) are distributed among the demands $D_{RT,i}$, $D_{NRT,THP1,i}$, $D_{NRT,THP2,i}$, $D_{NRT,THP3,i}$ within the same TCs and THPs accordingly.

In case the accumulated bandwidth demand D is less than the available bandwidth A, as for instance depicted in the Figs. 2 and 3, an expansion factor E can similarly be applied to the bandwidth demands $D_{RT}$, $D_{NRT}$, e.g. during the PFC scheduling phase, thus allocating available bandwidths $A_{RT}$, $A_{NRT}$ in excess of the original demands $D_{RT}$, $D_{NRT}$.

Such a situation is also shown in Fig. 5.

It is understood that the bandwidth demands D are not only accumulated from different traffic classes and/or traffic handling priorities but can also be an accumulation of demands D of several mobile stations 2, 3 of the connected group. Fig. 5 illustrates such a "mixed" situation, where at least one GPRS mobile station 2 and at least one EDGE mobile station 3 are grouped to share at least one EDGE-TDMA timeslot 16.

The guaranteed bit rate per timeslot $pfcTSGBR_{EDGE}$ for EDGE mobile stations 3 in this example is 20 kbits/s; the accumulated bandwidth demand $D_{EDGE}$ of the EDGE mobile station(s) 3 is 8 kbits/s; the guaranteed bit rate per timeslot $pfcTSGBR_{GPRS}$ for GPRS mobile stations 2 is 8 kbits/s; and the accumulated bandwidth demand $D_{GPRS}$ of the GPRS mobile station(s) 2 is 2 kbits/s. In this example, there remains an extra free available bandwidth $A_{free}$ of 2.8 kbits/s for GPRS mobile stations 2 or 7 kbits/s for EDGE mobile stations 3 which cannot be easily allocated directly to these two types of mobile stations 2, 3.

To solve this allocation problem, the expansion factor E is calculated according to

$$E = \frac{NbTSinCGroup}{\dfrac{D_{GPRS}}{pfcTSGBR_{GPRS}} + \dfrac{D_{EDGE}}{pfcTSGBR_{EDGE}}} \qquad (\text{eq. 8})$$

The parameter NbTSinCGroup specifies the number of timeslots 16 that are shared by the group of mobile stations 2, 3; in the example of Fig. 5, NbTSinCGroup equals 1.

In the example of Fig. 5, equation 8 results in an expansion factor E = 1/(2/8+8/20) = 1.538.

By the expansion factor E, the available bandwidth A can be allocated to the at least one GPRS and the at least one EDGE mobile station 2, 3 according to

$$A_{GPRS} = E \cdot D_{GPRS}$$

$$(\text{eq. 9})$$

$$A_{EDGE} = E \cdot D_{EDGE}$$

with $A_{GPRS}$ being a portion of the allocated bandwidth A for data transmissions of the GPRS mobile station(s) 2 of said group and $A_{EDGE}$ being the portion of the allocated bandwidth A for data transmissions of the EDGE mobile station(s) 3 of said group.

As the expansion factor E is greater than 1 in the example of Fig. 5, the allocated bandwidth $A_{GPRS}$, $A_{EDGE}$ is greater than the respective accumulated bandwidth demand $D_{GPRS}$, $D_{EDGE}$. In the given example of Fig. 5, the allocated bandwidths $A_{GPRS}$, $A_{EDGE}$ will be $A_{GPRS}$ = 1.538·2 = 3.08 kbits/s and $A_{EDGE}$ = 1.538·8 = 12.31 kbits/s according to equations 9.

In this case, neither the physical limitations of the GPRS mobile station(s) 2, nor those of the EDGE mobile station(s) 3 are exceeded and no available bandwidth remains unused.

An alternative way of calculating the expansion factor E is according to:

$$E = \frac{NbTSinCGroup \cdot pfcTSGBR_{EDGE}}{D_{GPRStoEDGE} + D_{EDGE}} \qquad (\text{eq. 10})$$

wherein $D_{GPRStoEDGE}$ is the accumulated bandwidth demand $D_{GPRS}$ of the at least one GPRS mobile station 2 of said group, scaled up to the predetermined EDGE guaranteed bit rate $pfcTSGBR_{EDGE}$ according to

$$D_{GPRStoEDGE} = S_f \cdot D_{GPRS} \qquad \text{(eq. 11)}$$

with a scaling factor $S_f$ of:

$$S_f = \frac{pfcTSGBR_{EDGE}}{pfcTSGBR_{GPRS}} \qquad \text{(eq. 12)}$$

In this case, the allocation of available bandwidths $A_{GPRS}$, $A_{EDGE}$ for data transmissions of GPRS and EDGE mobile stations 2, 3, respectively, is performed according to

$$A_{GPRS} = E \cdot D_{GPRStoEDGE} \cdot \frac{1}{S_f}$$

$$\text{(eq. 13)}$$

$$A_{EDGE} = E \cdot D_{EDGE}$$

In the given example of Fig. 5, the scaling factor $S_f$ is $S_f$ = 20/8 = 2.5 according to equation 12, the scaled accumulated bandwidth demand $D_{GPRStoEDGE}$ of the GPRS mobile station(s) 2, according to equation 11, results in $D_{GPRStoEDGE}$ = 2.5·2 = 5 kbits/s and, using the expansion factor E = 1 · 20/ (5 + 8) = 1.538 (as per equation 10) for equations 13, the allocated available bandwidths $A_{GPRS}$, $A_{EDGE}$ become $A_{GPRS}$ = 1.538 · 5 · 1/2.5 = 3.08 kbits/s and $A_{EDGE}$ = 1.538 · 8 = 12.31 kbits/s.

The accumulated bandwidth demands $D_{GPRS}$, $D_{EDGE}$ may each comprise a sum of RT and/or NRT bandwidth demands $D_{RT}$, $D_{NRT}$. Furthermore, said NRT bandwidth demand $D_{NRT}$ may comprise a sum of NRT bandwidth demands $D_{NRT,THP1}$, $D_{NRT,THP2}$, $D_{NRT,THP3}$ of three different predefined traffic handling priorities. The calculated available bandwidths $A_{GPRS}$, $A_{EDGE}$ may then be broken down further to different TCs, THPs and/or mobile stations 2, 3, if necessary.

Using the scaling factor $S_f$, all bandwidth demands $D_{RT,i}$, $D_{NRT,THP1,i}$, $D_{NRT,THP2,i}$, $D_{NRT,THP3,i}$ of GRPS mobile stations 2 can be scaled to an EDGE-TDMA timeslot 16 similar to the scaled accumulated bandwidth demand $D_{GPRStoEDGE}$ and used like any other bandwidth demand $D_{RT,i}$, $D_{NRT,THP1,i}$, $D_{NRT,THP2,i}$, $D_{NRT,THP3,i}$ of EDGE mobile stations 3. Thereby, also determining the best allocation in a timeslot 16 for an incoming mobile station 2, 3 during the offer computation phase and/or checking whether the timeslot 16 allows to satisfy the mobile demand during the admission control phase can be accomplished in mixed situations, where at least one GPRS mobile station 2 and at least one EDGE mobile station 3 are combined in a group sharing at least one EDGE-TDMA timeslot 16.

The method presented herein for allocating available bandwidth for packet switched data transmissions, where GPRS and EDGE mobile stations 2, 3 share at least one timeslot 16, can be performed both for uplink and downlink data transmissions separately.

The invention is not limited to the preferred embodiments described in detail above but comprises all variants and modifications thereof which fall into the scope of the appended claims.

## Claims

1.  A method of allocating available bandwidth (A) for packet switched data transmissions in a GSM or GSM-R system (1) having a PFC service module for handling bandwidth demands (D) from mobile stations (2, 3), a group of which shares at least one TDMA timeslot (16) and contains at least one GPRS (2) and at least one EDGE mobile station (3), comprising:

    - calculating an expansion factor E according to

$$E = \frac{NbTSinCGroup}{\dfrac{D_{GPRS}}{pfcTSGBR_{GPRS}} + \dfrac{D_{EDGE}}{pfcTSGBR_{EDGE}}}$$

with

*NbTSinCGroup* being the number of TDMA timeslots (16) shared by said group,
$D_{GPRS}$, $D_{EDGE}$ being the accumulated bandwidth demands of the GPRS and the EDGE mobile stations (2, 3), respectively, of said group,
$pfcTSGBR_{GPRS}$, $pfcTSGBR_{EDGE}$ being predetermined guaranteed bit rates per timeslot (16) for data transmissions of GPRS and EDGE mobile stations (2, 3), respectively; and

- allocating available bandwidths (A) to the at least one GPRS and the at least one EDGE mobile station (2, 3) according to

$$A_{GPRS} = E \cdot D_{GPRS}$$

$$A_{EDGE} = E \cdot D_{EDGE}$$

with
$A_{GPRS}$, $A_{EDGE}$ being the allocated bandwidths for data transmissions of the GPRS and the EDGE mobile stations (2, 3), respectively, of said group.

2. The method according to claim 1, **characterized in that** said step of calculating the expansion factor E is performed according to

$$E = \frac{NbTSinCGroup \cdot pfcTSGBR_{EDGE}}{D_{GPRStoEDGE} + D_{EDGE}}$$

with

$$D_{GPRStoEDGE} = S_f \cdot D_{GPRS}$$

and

$$S_f = \frac{pfcTSGBR_{EDGE}}{pfcTSGBR_{GPRS}} \quad ;$$

and
**in that** said step of allocating available bandwidths (A) is performed according to

$$A_{GPRS} = E \cdot D_{GPRStoEDGE} \cdot \frac{1}{S_f}$$

$$A_{EDGE} = E \cdot D_{EDGE} \quad .$$

**3.** The method according to claim 1 or 2, **characterized in that** said accumulated bandwidth demands ($D_{GPRS}$, $D_{EDGE}$) each comprise a sum of realtime and non-realtime bandwidth demands ($D_{RT}$, $D_{NRT}$).

**4.** The method according to claim 3, **characterized in that** said non-realtime bandwidth demand ($D_{NRT}$) comprises a sum of non-realtime bandwidth demands ($D_{NRT,THP1}$, $D_{NRT,THP2}$, $D_{NRT,THP3}$) of three different predefined traffic handling priorities.

**5.** The method according to one of the claims 1 to 4, **characterized in that** said method is performed separately for uplink and downlink data transmissions.

**Patentansprüche**

**1.** Verfahren zum Zuteilen verfügbarer Bandbreite (A) für paketvermittelte Datenübertragungen in einem GSM- oder GSM-R-System (1) mit einem PFC-Servicemodul zur Verwaltung von Bandbreitenbedarfen (D) von Mobilstationen (2, 3), von denen eine Gruppe sich zumindest einen TDMA-Zeitschlitz (16) teilt und zumindest eine GPRS-Mobilstation (2) und zumindest eine EDGE-Mobilstation (3) beinhaltet, umfassend:

- Berechnen eines Expansionsfaktors E gemäß

$$E = \frac{NbTSinCGroup}{\dfrac{D_{GPRS}}{pfcTSGBR_{GPRS}} + \dfrac{D_{EDGE}}{pfcTSGBR_{EDGE}}}$$

wobei

*NbTSinCGroup* die Anzahl von TDMA-Zeitschlitzen (16) ist, welche sich die genannte Gruppe teilt,
$D_{GPRS}$, $D_{EDGE}$ die akkumulierten Bandbreitenbedarfe der GPRS- bzw. EDGE-Mobilstationen (2, 3) der genannten Gruppe sind,
pfcTSGBR$_{GPRS}$, pfcTSGBR$_{EDGE}$ vorbestimmte, garantierte Bitraten pro Zeitschlitz (16) für Datenübertragungen von GPRS- bzw. EDGE-Mobilstationen (2, 3) sind; und

- Zuteilen verfügbarer Bandbreiten (A) an die zumindest eine GPRS- und die zumindest eine EDGE-Mobilstation (2, 3) gemäß

$$A_{GPRS} = E \cdot D_{GPRS}$$

$$A_{EDGE} = E \cdot D_{EDGE}$$

wobei
A$_{GPRS}$, A$_{EDGE}$ die zugeteilten Bandbreiten für Datenübertragungen der GPRS- bzw. EDGE-Mobilstationen (2, 3) der genannten Gruppe sind.

2. Verfahren nach Anspruch 1, **dadurch gekennzeichnet, dass** der genannte Schritt des Berechnens des Expansionsfaktors E gemäß

$$E = \frac{NbTSinCGroup \cdot pfcTSGBR_{EDGE}}{D_{GPRStoEDGE} + D_{EDGE}}$$

mit

$$D_{GPRStoEDGE} = S_f \cdot D_{GPRS}$$

und

$$S_f = \frac{pfcTSGBR_{EDGE}}{pfcTSGBR_{GPRS}}$$

durchgeführt wird, und dass der genannte Schritt des Zuteilens verfügbarer Bandbreiten (A) gemäß

$$A_{GPRS} = E \cdot D_{GPRStoEDGE} \cdot \frac{1}{S_f}$$

$$A_{EDGE} = E \cdot D_{EDGE}$$

durchgeführt wird.

3. Verfahren nach Anspruch 1 oder 2, **dadurch gekennzeichnet, dass** die akkumulierten Bandbreitenbedarfe ($D_{GPRS}$, $D_{EDGE}$) jeweils eine Summe von Echtzeit- und Nicht-Echtzeit-Bandbreitenbedarfen ($D_{RT}$, $D_{NRT}$) umfassen.

4. Verfahren nach Anspruch 3, **dadurch gekennzeichnet, dass** der genannte Nicht-Echtzeit-Bandbreitenbedarf ($D_{NRT}$) eine Summe von Nicht-Echtzeit-Bandbreitenbedarfen ($D_{NRT,THP1}$, $D_{NRT,THP2}$, $D_{NRT,THP3}$) von drei verschiedenen, vordefinierten Verkehrsverwaltungsprioritäten umfasst.

5. Verfahren nach einem der Ansprüche 1 bis 4, **dadurch gekennzeichnet, dass** das genannte Verfahren getrennt für Uplink- und Downlink-Datenübertragungen durchgeführt wird.

**Revendications**

1. Procédé d'allocation d'une largeur de bande disponible (A) pour des transmissions de données par communication par paquets dans un système GSM ou GSM-R (1) ayant un module de service PFC pour le traitement des demandes de largeur de bande (D) à partir de stations mobiles (2, 3), dont un groupe partage au moins un intervalle de temps TDMA (16) et contient au moins une station mobile GPRS (2) et au moins une station mobile EDGE (3), comprenant :

- le calcul d'un facteur d'expansion E selon

$$E = \frac{NbTSinCGroup}{\dfrac{D_{GPRS}}{pfcTSGBR_{GPRS}} + \dfrac{D_{EDGE}}{pfcTSGBR_{EDGE}}}$$

avec

$NbTSinCGroup$ représentant le nombre d'intervalles de temps TDMA (16) partagés par ledit groupe,
$D_{GPRS}$, $D_{EDGE}$ représentant les demandes de largeur de bande cumulées des stations mobiles GPRS et EDGE, respectivement, dudit groupe,
$pfcTSGBR_{GPRS}$, $pfcTSGBR_{EDGE}$ représentant des débits binaires prédéterminés garantis par intervalle de temps (16) pour des transmissions des données des stations mobiles GPRS et EDGE (2, 3), respectivement ; et

- l'allocation des largeurs de bande (A) disponibles à l'au moins une station mobile GPRS et à l'au moins une station mobile EDGE (2, 3) selon

$$A_{GPRS} = E \cdot D_{GPRS}$$

$$A_{EDGE} = E \cdot D_{EDGE}$$

avec
$A_{GPRS}$, $A_{EDGE}$ représentant les largeurs de bande attribuées aux transmissions des données des stations mobiles GPRS et EDGE (2, 3), respectivement, dudit groupe.

2. Procédé selon la revendication 1, **caractérisé en ce que** ladite étape de calcul du facteur d'expansion E est conduite selon

$$E = \frac{NbTSinCGroup \cdot pfcTSGBR_{EDGE}}{D_{GPRStoEDGE} + D_{EDGE}}$$

avec

$$D_{GPRStoEDGE} = S_f \cdot D_{GPRS}$$

et

$$S_f = \frac{pfcTSGBR_{EDGE}}{pfcTSGBR_{GPRS}}$$

et
**en ce que** ladite étape d'allocation des largeurs de bande disponibles (A) est conduite selon

$$A_{GPRS} = E \cdot D_{GPRStoEDGE} \cdot \frac{1}{S_f}$$

$$A_{EDGE} = E \cdot D_{EDGE}$$

3.  Procédé selon la revendication 1 ou 2, **caractérisé en ce que** lesdites demandes cumulées de largeur de bande ($D_{GPRS}$, $D_{EDGE}$) comprennent chacune une somme de demandes de largeur de bande en temps réel et en temps non réel ($D_{RT}$, $D_{NRT}$).

4.  Procédé selon la revendication 3, **caractérisé en ce que** ladite demande de largeur de bande en temps non réel ($D_{NRT}$) comprend une somme de demandes de largeur de bande en temps non réel ($D_{NRT,THP1}$, $D_{NRT,THP2}$, $D_{NRT,THP3}$) de trois priorités prédéfinies différentes de traitement du trafic.

5.  Procédé selon l'une quelconque des revendications 1 à 4, **caractérisé en ce que** ledit procédé est conduit de manière séparée pour les transmissions des données en liaison montante et en liaison descendante.

*Fig. 1*

EP 2 852 237 B1

**Fig. 2**

**Fig. 3**

**Fig. 4**

**Fig. 5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1437866 A1

### Non-patent literature cited in the description

- An efficient analytical model for QoS engineering in mobile cellular networks. *World of Wireless, Mobile and Multimedia Networks, 2008. WoWMoM 2008. 2008 International Symposium, IEEE, Piscataway, NJ, USA,* 2008

- Enhancements to support of streaming services in GERAN A/Gb mode. *3GPP Draft; S2-030086, 3rd Generation Partnership Project (3GPP), Mobile Competence Centre ; 650, route des Lucioles ; F-06921 Sophia-Antipolis Cedex ; France*